# EUROPEAN PATENT SPECIFICATION

(11) **EP 3 048 429 B1**
(45) Date of publication and mention of the grant of the patent: **26.08.2020**
(21) Application number: 15152536.7
(22) Date of filing: 26.01.2015
(51) Int. Cl.: F04D 17/16, G01F 1/36, G01F 1/40, G01F 15/18

(54) **Device for measuring a main fluid flow through a ventilation installation**
Vorrichtung zur Messung einer Fluidströmung durch eine Belüftungsanlage
Dispositif pour mesurer un flux principal de fluide à travers une installation de ventilation

(43) Date of publication of application: 27.07.2016
(73) Proprietor: Sensirion AG, 8712 Stäfa (CH)
(72) Inventor: Hornung, Mark, 8712 Stäfa (CH); Monnin, Eric, 8712 Stäfa (CH); Meier, Bruno, 8712 Stäfa (CH); Cerna, Roland, 8712 Stäfa (CH)
(74) Representative: Strässle, Simon

(56) References cited:
- EP-A2- 1 046 864
- WO-A1-02/093114
- US-A- 5 426 975

## Description

### TECHNICAL FIELD

The present invention relates to a device for measuring a main fluid flow through a ventilation installation, more particularly to a sensor adaptor element for coupling a differential pressure sensor element to a centrifugal fan's casing such that a differential pressure between a point in the vicinity of a suction opening of the fan and ambient pressure may be determined.

### PRIOR ART

EP 0 419 798 discloses a centrifugal fan with an outer casing including a suction port with a suction orifice for aspirating air. In the suction port is arranged an opening as a pressure tapping port for determining a pressure difference between the local pressure at the port and the ambient pressure. From the pressure difference the total flow rate through the centrifugal fan is determined.

WO 92/2270 describes an apparatus for measurement of a total flow rate in a centrifugal fan. A tube-like measurement probe with one open end is brought into the vicinity of the suction opening, *i.e*. deeply in the fluid flow of the fan in order to probe the local pressure there, from which the total flow rate of the system is determined.

US 5,426,975 discloses an apparatus for determining the total air flow rate in a ventilation installation having a fan with a fan wheel. A measurement tube is mounted on a bracket adjacent the inlet opening of the supply air fan.

### SUMMARY OF THE INVENTION

It is an object of the present invention to provide an improved sensor adaptor element for coupling a differential pressure sensor element to a ventilation installation for measuring a total main fluid flow through the ventilation installation more accurately. This object is achieved by a sensor adaptor element according to claim 1. Said sensor adaptor element for a differential pressure sensor is attachable to or integrated in a ventilation installation, in particular to a centrifugal fan. The sensor adaptor element comprises a base element, and further comprises or is further adapted to create with a casing of the ventilation installation a pressure tapping duct. The pressure tapping duct comprises an inlet opening and first and second pressure tapping ports for probing with the differential pressure sensor local pressures in said pressure tapping duct. The first pressure tapping port is disposed downstream of the second pressure tapping port. Furthermore, the sensor adaptor element comprises an outlet opening that may be placed in a main fluid flow entering the ventilation installation such that a Venturi effect occurs at the outlet opening causing an under pressure in at least part of said pressure tapping duct, wherein, preferably, fluid is sucked into the inlet opening and through said pressure tapping duct. Moreover, the base element is a plate-like element and the outlet opening is a slot-like opening. Accordingly, the differential pressure sensor attachable to the sensor adaptor element may determine the pressure difference between the two tapping ports, wherein the pressure difference is associated with or a direct measure of the main fluid flow. The under pressure is an under pressure that may be measured by conventional differential pressure sensors such as flow-through or static membrane sensors. In some preferred embodiments, the sensor adaptor element further comprises at least one fluid deflection element that comprises or that is adapted to create with the base element a Venturi channel, the Venturi channel being designed such that part of a main fluid flow sucked into said ventilation installation is deflected into said Venturi channel and guided to overflow said outlet opening.

In other words, in some preferred embodiments, said sensor adaptor element is removable from or installable to the installation ventilation and comprises the base element, the base element having a top surface and a bottom surface and being designed to be attachable to the ventilation installation, the ventilation installation being adapted to suck-in the main fluid flow.

The sensor adaptor element provides the pressure tapping duct or is designed to form the pressure tapping duct if the sensor adaptor element is attached to the ventilation installation. The pressure tapping duct comprises the inlet opening to be placed substantially outside said main fluid flow, and, at a first edge of the base element, the outlet opening to be placed substantially in said main fluid flow. If a dynamic differential pressure sensor is used (*i.e.* if the sensor is a flow-through sensor), the inlet opening and the outlet opening are in fluidic communication with one another via the pressure tapping duct. If a static differential pressure sensor is used (such as a membrane sensor), the inlet opening and the outlet opening of the pressure tapping duct are not directly fluidly connected to one another.

Moreover, the base element comprises the first tapping port and the second tapping port for probing local pressures in the pressure tapping duct by means of the differential pressure sensor, wherein the first tapping port and the second tapping port are spaced to one another along the pressure tapping duct.

The sensor adaptor element further comprises the at least one fluid deflection element that is arranged at or close to the first edge such that a part of said main fluid flow is deflectable to flow into the at least one Venturi channel, the Venturi channel being comprised in the deflection element or being created between the top surface of the base element and the fluid deflection element, wherein the Venturi channel guides said part of the main fluid flow to overflow the outlet opening of the pressure tapping duct.

The term *"attachable to a ventilation installation"* is to be understood as the sensor adaptor element is a removable device that is shaped such that it may be fastened to the ventilation installation. Accordingly, the sensor adaptor element may, in the simplest embodiment, provide a contact surface for contacting a casing of the ventilation system. In some embodiments, the sensor adaptor element may provide fastening means or parts thereof.

The term *"integrated to a ventilation installation"* is to be understood as the sensor adaptor element being directly integrated to and therefore part of the casing wall of the ventilation installation.

In some embodiments, the sensor adaptor element may provide a pressure tapping duct that is fully integrated into the base element. In other embodiments, the base element may be recessed such that, once it is in contact with the casing of the ventilation installation, the pressure tapping duct is formed between the base element and the casing of the ventilation system. Accordingly, in some embodiments, the pressure tapping duct is finally closed or completed upon fastening the sensor adaptor element to the casing. For this purpose, a further plate-like element may be provided on or integrated to the casing wall such that the pressure tapping duct with inlet and outlet opening is completed or created.

The term *"pressure tapping duct"* is a channel with an inlet and an outlet opening. The sensor adaptor element is designed such that, if it is arranged on the casing, the inlet opening may be placed substantially outside said main fluid flow sucked in by the ventilation installation. The duct may be designed for dynamic (*i*.*e*. flow-through) differential pressure sensors or for static differential pressure sensors such as membrane sensors.

The outlet opening is arranged to be placed substantially in the main fluid flow, preferably in the vicinity or directly at a first edge of the base element such that the outlet opening may be placed substantially in said main fluid flow upon arranging the sensor adaptor element on the ventilation installation. The outlet opening may be a slot-like opening that follows a curvature of a periphery edge of a suction orifice of the ventilation installation. The outlet opening is the measurement port where the flow parameter for determining the main fluid flow is tapped through the duct and the pressure sensor.

A slot-like outlet opening is advantageous as measurement port as the measured parameter is average over a predefined area to yield a more accurate average value. The slot-like outlet opening of the pressure tapping duct may extend along the periphery edge of the suction orifice to cover 3% up to 100% of the circumference of the periphery edge. Accordingly, the base element may have the shape of annular section or of a full annulus. The annular section design has, however, the advantage, that the base element may be conveniently used for ventilation installations with differently sized suction orifices while the full annulus design would distort the ventilation installation, if the diameter of the annulus does not sufficiently correspond to the diameter or the shape of the suction orifice.

Moreover, in the case that the outlet opening is only created in cooperation with the casing of the installation or the further plate-like element - *i.e.* the base element has only a recess on its bottom side but does not provide a fully integrated pressure tapping duct -, the annular section design allows adjusting the size of the outlet opening by shifting the base element on the casing. If the base element is shifted to protrude more into the main fluid flow, the outlet-opening slot becomes larger and vice-versa. A typical opening slot width depends on the actual measurement setup and may be 1 millimeter to 10 millimeters; a typical opening slot length may range between 10 millimeters to the length of the periphery edge of the suction orifice.

Preferably, the base element section located upstream the outlet opening, *i*.*e*. part of the top surface of the base element, smoothly tapers into flow direction to smoothly guide the fluid to overflow the outlet opening.

The term *"tapping port"* refers to an opening that allows a state of the art differential pressure sensor to tap the local pressure in the pressure tapping duct. The term *"second tapping port"* refers to a tapping port that is arranged to enter into the pressure tapping duct at a location that is upstream of a location where the first tapping port enters into the pressure tapping duct. Accordingly, the term *"first tapping port"* refers to a tapping port that is disposed to enter the duct at a position that is downstream of the duct-entering position of said second tapping port.

Accordingly, the present invention is based on the insight that a sensor adaptor element may be provided to which the differential pressure sensor may be directly attached such as to measure a differential pressure in the pressure tapping duct created or integrated in the sensor adaptor element.

The term *"fluid deflection element"* refers to a flat element that is arranged at a distance to the first edge or the outlet opening such that an additional Venturi channel is created between the top surface of the base element and the deflection element, wherein the deflection element is designed such that it deflects some of the main fluid flow sucked into the suction orifice of the ventilation system and guides it in the Venturi channel to flow over the outlet opening of the pressure tapping duct. The Venturi channel reduces turbulences that naturally occur at the location of the outlet opening. Accordingly, the Venturi effect acting at the outlet opening is, in effect, stabilized, which reduces measurement noise of the differential pressure sensor.

The Venturi channel stabilizes, in effect, the pressure difference measured by the differential pressure sensor and therefore improves the accuracy with which the main fluid flow of the ventilation installation may be measured.

Accordingly, a particularly preferred embodiment includes the fluid deflection element placed between the outlet opening and the center flow line of main fluid flow through the ventilation installation calms down turbulences and allows for more precise measurements.

The term *"part of the main fluid flow to overflow the outlet opening"* means that said part of the main fluid flow is guided to stream over the outlet opening. Preferably, said part of the main fluid flow passes the outlet opening such that no extra static pressure is applied to the fluid volume in the pressure tapping duct and that the dynamic pressure in suction orifice is measured. Accordingly, the pressure tapping duct is curved or tapers in the region of the outlet opening such that an outlet direction of the outlet opening and the direction of the Venturi channel extend along the same direction.

In some embodiments, the fluid deflection element covers the outlet opening, *i*.*e*. the fluid deflection element is shaped and arranged such that the outlet opening opens into the Venturi channel, *i.e.* the outlet opening is disposed between upstream and downstream edge of the deflection element.

In other embodiments, the downstream edge of the deflection element is disposed upstream of the outlet opening while the fluid exiting the Venturi channel is directly guided to over the outlet opening. Accordingly, the deflection element not directly covers the outlet opening, the outlet opening is however, shielded from distortions by the highly directed fluid flow exiting the Venturi channel.

Preferably, the pressure tapping duct extends substantially to the main fluid flow or the Venturi channel direction and curves, in the region of the outlet opening, in the direction of the Venturi channel. Preferably, the exit direction of flow out of the pressure tapping duct and the flow direction in the Venturi channel where the outlet opening is located, extend substantially in the same direction and preferably include only an acute angle or are parallel to one another.

In some embodiments, the Venturi channel tapers toward the outlet opening. The tapering of the Venturi channel increases the flow speed of the fluid flowing in the Venturi channel, which enhances the Venturi effect at the outlet opening of the pressure tapping duct and increases the shielding effect of the fluid being conveyed through the Venturi channel.

In some embodiments, the pressure tapping duct extends, at least in sections, perpendicularly or angularly to a direction of the Venturi channel. In some embodiments, the inlet opening is disposed at a second edge of the base element, the second edge being arranged opposite the first edge. Accordingly, the inlet opening and the outlet opening are arranged at opposing ends of the base element, *i.e.* the pressure tapping duct is extending through or along the entire base element. This allows using a minimum of material for the base element. Moreover, the inlet opening of the pressure tapping duct may be placed away from the main flow over a distance that is substantially the length of the base element.

In some embodiments, the duct is separated by the restriction element in two volumes (one of which associated with the first, the other with the second pressure tapping port), wherein the two volumes are not in fluid communication with one another during use (static differential pressure sensor arrangement). In other embodiments, fluid flow through the duct may occur (dynamic differential pressure sensor arrangement), wherein said flow is preferably guided entirely through the flow-through sensor; alternatively, some of the flow may shortcut the sensor.

In some embodiments, an edge region of the base element at the first edge is an annular section tapering toward the first edge. This allows that the first edge may be conveniently arranged at an appropriate distance to the casing of the ventilation installation. As ventilation installations typically have a casing with periphery edge region around the suction orifice that is tapering in flow direction, the tapering edge region of the base element allows to choose the distance between the first edge and the periphery edge region of the casing, *i.e.* by positioning the base element on the casing, the user may chose the dimensions of the outlet opening formed between the base element and the casing. This is particularly relevant for the embodiments with base elements with a pressure tapping duct that is only closed or completed along its length upon fastening the sensor adaptor element to the casing or the further plate-like element, *i*.*e*. in cooperation with the casing or the further plate-like element.

In some embodiments, the first edge and the fluid deflection element are curved along their lengthwise direction. This allows an optimal placement of the outlet opening in the main fluid flow sucked into the suction opening, while the fluid flow distortion is kept at a minimum. Preferably, a curvature of the first edge and the fluid deflection element is substantially the same as the curvature of the periphery edge of the suction port wall of the ventilation installation.

The base element is a plate-like element. In some embodiments, the inlet opening is a slot-like opening. The plate-like shape of the base element has the advantage that the height of the sensor adaptor element is minimal while its contact surface with the casing of the ventilation installation, being preferably on the bottom surface of the base element, is comparatively large, which enhances the stability of the sensor adaptor element on the casing. The slot-like inlet opening uses the geometry of the plate-like base element. The slot-like inlet opening provides also a comparatively large inlet opening; this reduces the flow velocity of the fluid sucked through the inlet opening, which is advantageous as contaminants are less likely to be aspirated and sucked into the pressure tapping duct. Partition wall elements may be arranged in the slot-like outlet opening such as to avoid fluid flow along the slot.

In some embodiments, a flow restriction element is arranged in the pressure tapping duct. This restriction element locally restricts or completely blocks the cross section of the pressure tapping duct. The flow restriction element is preferably disposed between the first and second tapping ports. The restriction element preferably restricts a cross section of the pressure tapping duct by at least 20% to 100%, preferably by 30% to 80% or 100% of its cross section at the inlet opening. The restriction element may allow part of the fluid flow to shortcut the differential pressure sensor such that the sensor adaptor element may be used with a variety of differential pressure sensors suitable for different test flow rates. Accordingly, if the fluid flow rate through the pressure tapping duct is too large for being accepted by the differential pressure sensor, some of the flow may be guided through the pressure tapping duct without passing through the sensor, e.g. some of the flow may passes over the restriction element.

Preferably, the restriction element completely blocks the pressure tapping duct such that all the fluid sucked into the fluid inlet through the Venturi effect at the fluid outlet is guided through the duct, and the meander patter, if any, (see below), and guided through the second tapping port into the differential pressure sensor. From the differential pressure sensor the fluid is guide back to the sensor adaptor element through the first tapping port and from there to the fluid outlet into the main fluid flow. By means of the restricting element, the pressure between the two tapping ports is created.

The pressure tapping element preferably widens downstream of the flow restriction element into a chamber. Preferably, the first tapping port taps the pressure of that chamber while the second tapping port is arranged upstream of the restriction element, preferably upstream of a meander pattern (see below). Moreover, said chamber preferably tapers in downstream direction of the pressure tapping duct toward the outlet opening.

In some embodiments the pressure tapping duct, in particular the bottom surface of the base element, has a meander structure. The meander structure is preferably arranged upstream of the pressure tapping ports. The meander structure may consist of a plurality of webs that are arranged in the pressure tapping duct and oriented substantially perpendicularly to the flow direction in the duct. The may be arranged such as to establish a meandering path leading from the inlet opening to the second tapping port. A height of the webs may, in some embodiments, extend through the entire duct. In other embodiments, however, the webs have a height that only about30% to 95% the height of the duct. The fluid flowing in the pressure tapping duct therefore either is force through a meandering path or to flow over webs such that a damping effect is achieved. Accordingly, it is preferred to have the webs attached to the bottom surface, whilst they protrude into the duct with a height that corresponds substantially to half the height of the duct at the very same position.

In some embodiments, the deflection element has end wall elements delimiting the Venturi channel in the circumferential direction along the first edge. This minimizes circular turbulence in the Venturi channel.

In some embodiments, the circular turbulence may be further minimized by placing at least one, preferably a plurality of partition wall elements dividing the Venturi channel into Venturi sub channels. These sub channels are advantageous as the fluid flow over the outlet opening is further stabilized, which further reduces measurement noise in the differential pressure sensor.

The outlet opening of the pressure tapping duct may also be provided with partition wall elements such that a fluid flow in circumferential direction, *i*.*e*. along the first edge, is minimized.

The partition wall elements may be spaced from one another by a distance that is equal to or larger than a width of the slot-like outlet opening or than a distance between the first edge and the fluid deflection element.

The differential pressure sensor may also be a static pressure sensor. In this case, the restriction element preferably completely blocks the pressure tapping duct while the static pressure sensor does not allow any flow through the tapping ports. Accordingly, no fluid flows through the pressure tapping duct, the Venturi effect at the outlet opining creates an under pressure in the region of the first tapping port while the second pressure tapping port is fluidly connected to the inlet opening and is at ambient pressure. In this case the inlet and the outlet opening are not fluidly connected.

The sensor adaptor element is preferably a single-piece element. It may be produced from plastics, thermoplastics, metals, and/or alloys.

The present invention also relates to a mass flow sensor device having a sensor adaptor element as described herein, wherein a differential pressure sensor is attached or connected to the tapping ports.

Moreover, the present invention relates to a ventilation installation, in particular to a centrifugal fan, with a sensor adaptor element or with a mass flow sensor device as described herein. The sensor adaptor element may be arranged on or in the casing or may be directly integrated into a casing wall during production of the casing. Moreover, the casing may be provided with a further element that allows attachment of the sensor adaptor element such that the pressure tapping duct is established. This further element may be arranged on or in the casing or directly integrated into the casing wall.

In some embodiments, the ventilation installation is a centrifugal fan with a suction port wall, wherein the suction port wall preferably has an annular shape tapering in the flow direction toward a suction orifice within the annular suction port wall.

In some embodiments, a casing of the ventilation installation has the shape of an annulus. Then sensor adaptor element may be arrange on a top wall of the casing and may have the shape of an annulus or of an annular section with a central angle in the range of 10° to 360°. In some embodiments, the sensor adaptor element probes all around the periphery edge of the suction port wall. In other embodiments, the annular section has a sector with a central angle smaller than or equal to 180°, preferably ranging 20° to 120°, more preferably between 30° to 60° or being 45°, and therefore only covers a part of the circumference of the suction port wall along the periphery edge.

In some embodiments, the sensor adaptor element that is shaped as said annular section is disposed on the annular casing, preferably close to the location, where a flow channel of the fan branches off the annulus toward the discharge opening of the casing.

The present invention also relates to a method of measuring a main fluid flow of a ventilation installation with a mass flow sensor device as described herein.

The embodiments described herein are illustrative of some of the applications of the principles of the present invention. Numerous modifications and/or combinations of features that are individually disclosed may be made.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a perspective view, a centrifugal fan with a sensor adapter element according to a preferred embodiment of the present invention;
- Fig. 2: shows the fan with the sensor adapter element according to Fig. 1 in top view;
- Fig. 3: shows a cross-sectional view along the A-A line (*cf* Fig. 4) of the sensor adapter element according to Fig. 1;
- Fig. 4: shows a top view of the sensor adapter element according to Fig. 1;
- Fig. 5: shows a perspective top view of the sensor adapter element according to Fig. 1; and
- Fig. 6: shows a perspective bottom view of the sensor adapter element according to Fig. 1.

### DESCRIPTION OF PREFERRED EMBODIMENTS

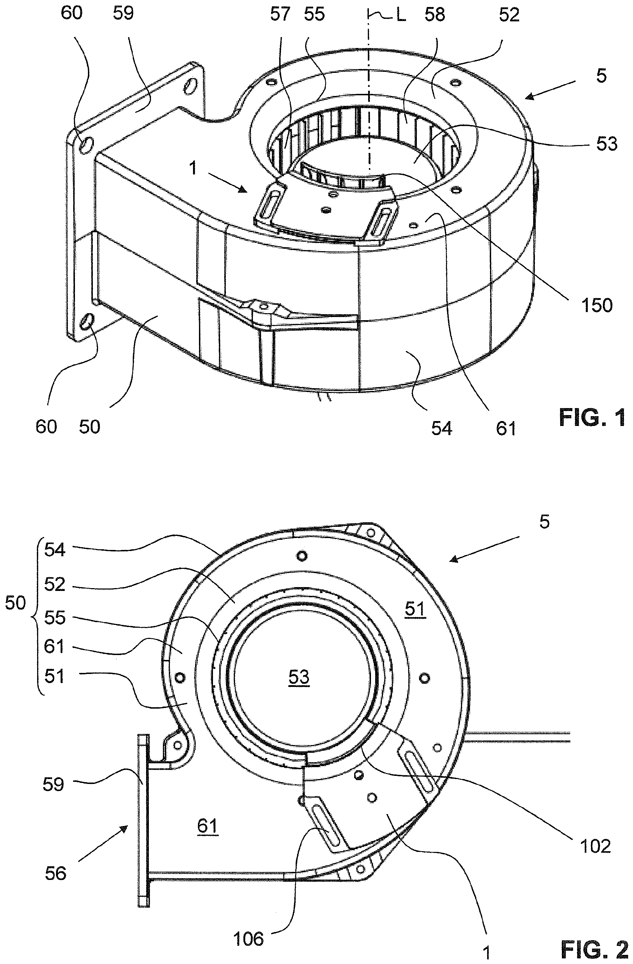

**Figures 1** and **2** illustrate, in a perspective view, a centrifugal fan 5 with a sensor adapter element 1 according to a preferred embodiment of the present invention.

The centrifugal fan 5 has a casing 50 with an outer surface 51. The casing 50 comprises an annular, bell-shaped suction port wall 52 tapering in the inlet direction and defining a circular suction orifice 53 around an axis L for fluid intake. The casing 50 further has a side wall 54 shaped such that fluid sucked through the suction orifice 53 is guided along a spiraling fluid path in a scroll that gradually expands in a plane extending perpendicularly to the axis L. Figure 2 shows said expansion in that an extension of the casing 50 in radial direction with respect to the axis L - *i.e.* a minimum distance from an inner periphery edge 55 of the suction port wall 52, said inner periphery edge 55 defining the minimum diameter of the circular suction orifice 53, to the side wall 54 - gradually increases in the downstream direction. The casing's fluid path then exits into a discharge port 56 for fluid outlet to the outdoors. As can be seen from Figs. 1 & 2, a downstream end of the fluid path close to discharge port 56 branches tangentially away from of the spiral such that the discharge port 56 is arranged at distance to the axis L.

A top wall 61 of the casing 50 at this branching point is the preferred location for placing the sensor adaptor element 1 on the casing 50 *(cf.* Figs. 1 & 2).

In the casing 50, around the inner periphery edge 55, is arranged a multiblade impeller 57. The impeller 57 comprises a plurality of fan blades 58 disposed around the axis L. The blades 58 are covered by the suction port wall 52 and periphery edge 55. The impeller 57 may be driven by means of a motor (not shown) to rotate about rotational axis L, while being implemented with appropriate electrical equipment (not shown). By rotating the impeller 57 around the axis L, an ambient fluid, such as air, is sucked into the circular suction orifice 53 by the moving blades 58; a main fluid flow establishes in the casing 50 along the fluid path from the suction port wall 52 to the discharge port 56, *i.e.* in clockwise direction in Fig. 2.

The discharge port 56 is encompassed by a flange 59 with mounting holes 60 for attachment to further structures.

On the top wall 61 of the casing 50 is arranged the sensor adaptor element 1. The sensor adaptor element 1 is disposed at its preferred position, *i.e.* in the area where the fluid path branches away from the spiral fluid path to extend along a straight line in tangential direction.

The sensor adaptor element 1 comprises a base element 10 that has the shape of an annular section with a central sector angle of about 30°, *i.e.* a curved first edge 101 of the base element 10 covers about 1/12 of the curved periphery edge 55 defining the suction orifice 53. The curvature of the first edge 101 is substantially the same as the curvature of the periphery edge 55.

In alternative embodiments, said sector angle may be smaller than or equal to 360°, *i.e.* the sensor adaptor element 1 may also be a full annulus using a circular first edge 101 to probe all around the periphery of the suction orifice 53.

The sensor adaptor element 1 is shaped as annular section with a radial extension that is substantially the same as the radial extension of the top wall 61 of the ring-shaped casing 50 where the sensor adaptor element 1 is arranged (*cf.* Fig. 2). It is to be understood, that the radial extension of the element 1 may also be larger or shorter than the radial extension of the casing 50.

The base element 10 extends between said first edge 101 and a second edge 102, said first and second edges 101, 102 being connected by an upstream side edge 103 and a downstream side edge 104. The first and second edges 101, 102 are spaced in radial direction to one another over the element's length; the upstream and downstream side edges 103, 104 are spaced in circumferential direction to one another over the element's width. The length of the sensor adaptor element 1 in radial direction is about 45 millimeters; the width of the sensor adaptor element 1 in circumferential direction is about 60 millimeters. A height of the base element 10 is about 4.5 millimeters.

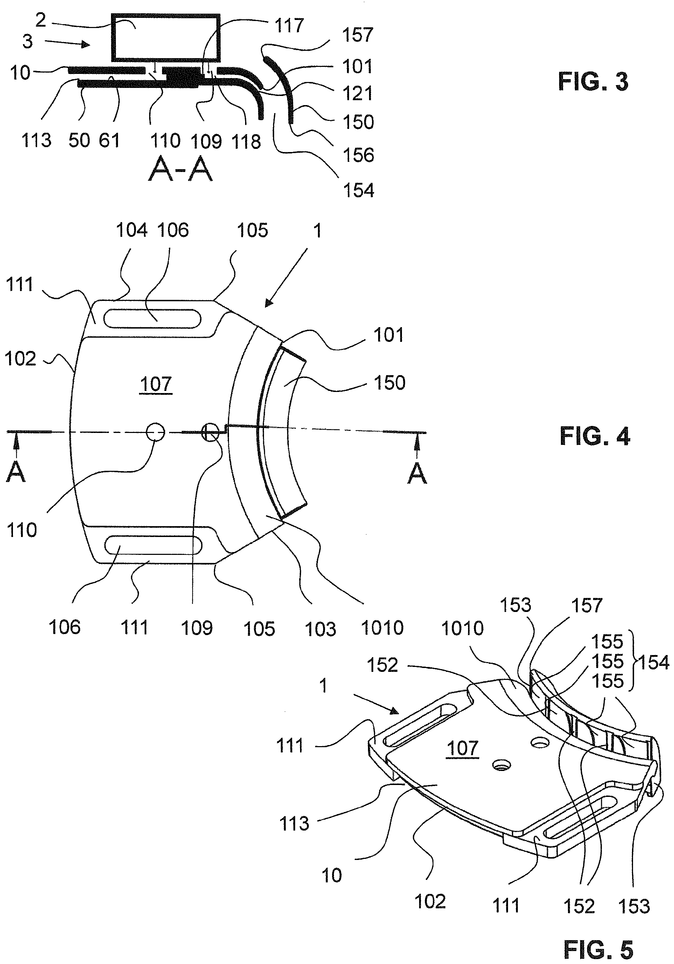

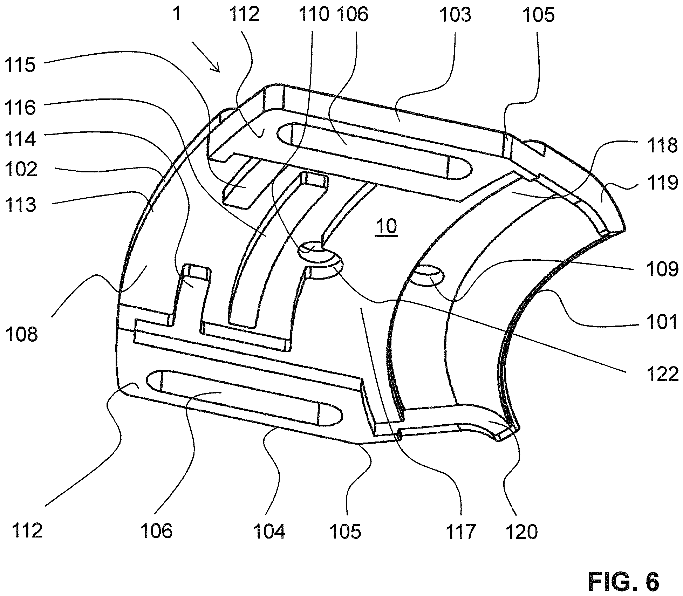

**Figure 3** shows a cross-sectional view through the sensor adaptor element 1 along a cut A-A (*cf.* Fig. 4) including a differential pressure sensor device 2. **Figure 4** illustrates a top view, **Figure 5** a perspective top view, and **Figure 6** a perspective bottom view of said sensor adaptor element 1.

As can be seen from Figs. 4 to 6, the first edge 101 and the second edge 102 are curved, while a curvature of the first edge 101 is stronger than a curvature of the second edge 102. The first and second edges 101, 102 are sections of concentric circles with their center close to the axis L when attached to the fan 5 as shown in Figs. 1 & 2.

The upstream and downstream side edges 103, 104 extend in radially outwardly such as to gradually diverge from one another; moreover, they have, in a middle region between the first edge 101 and the second edge 102, a kink 105, wherein, radially outwardly of said kink 105, *i.e.* away from the axis L in Figs. 1 & 2, the upstream and downstream side edges 103, 104 change direction such as to run parallel to one another (*cf.* Fig. 4).

Close to the second edge 102, in the region where the side edges 103, 104 run parallel, the base element 10 has oblong through-slots 106 that extend parallel to one another and to the upstream and the downstream side edges 103, 104. The oblong slots 106 have a length of about 22 millimeters, a width of about 4 millimeters, and they have rounded short edges. The oblong holes 106 serve for mounting purposes, e.g. for screw connections between the adaptor element 1 and the casing 50. The slot design is advantageous as the base element 10 may be shifted with the screws inserted but not yet tightened. Furthermore, the slots 106 are embedded in a substantially flat top surface 107 of the base element 10, *i.e.* a top edge region 111 of the slots 106 is not flush with the top surface 107 but recessed to about 1.5 millimeters below the top surface 107.

The top surface 107 of the plate-like base element 10 is substantially planar and extends between the four edges 101-104. The differential pressure sensor 2 may be placed on this top surface 107.

Opposite the top surface 107 is a bottom surface 108 of the base element 10. Close to the first edge 101, *i.e.* in an edge region 1010, the base element 10 curves smoothly downward. Accordingly, the top and bottom surfaces 107, 108 curve down as well. The curvature and the radial length of the curving edge region 1010 of base element 10 are chosen such that, once the adapter 1 is fastened to the top wall 61 of fan 5, the first edge 101 is disposed in or close to a plane through the contact surface of the base element 10 for contacting the casing 50. Accordingly, once the sensor adaptor element 1 is disposed on the casing 50 (*cf.* Figs. 1 & 2); the first edge 101 is arranged in the upstream periphery region of the suction orifice 53, *i.e.* close to or over the periphery edge 55.

In the base element 10 are disposed two through-holes 109, 110 fluidly connecting the planar region above the top surface 107 and the region below the bottom surface 108 of the base element 10 to one another. The through-holes 109, 110 are used as probing openings or tapping ports for the differential pressure sensor element 2. The tapping ports 109, 110 have diameters ranging between 3 millimeters to 5 millimeters. The pressure tapping duct is extending in radial direction. The ports 109, 110 are spaced along the duct; accordingly, they are spaced from one another in radial direction by 10 millimeters to 15 millimeters. The pressure difference between the two tapping ports 109, 110 is maximized by separating them spatially in flow direction. Accordingly, the tapping ports 109, 110 may be distinguished as the first tapping port 110 closer to the first edge 101 and as the second tapping port 109 closer to the second edge 102. The differential pressure sensor 2 may be connected to the sensor adaptor element 1 (*cf.* Fig. 4) for tapping the pressure difference between the different tapping ports 109, 110. The sensor adaptor element 1 and the differential pressure sensor 2 are parts of the mass flow sensor device 3.

Figure 6 shows the bottom surface 108 with the two tapping ports 109, 110 that fluidly connect the top surface side and the bottom surface side. As can be seen from Fig. 6, a bottom edge region 112 of the slots 106 provides the contact surface for contacting the top wall 61 of the casing 50. The base element 10 is recessed on its bottom side between the bottom edge regions 112 of the two slots 106 such as to provide an inlet slot 113 for fluid intake at the second edge 102 once the base element 10 is arranged on the flat top wall 61 (*cf.* Fig. 1). The inlet slot 113 may have a height of 3 millimeters and a length of about 35 millimeters.

The base element 10 is further recessed from below such that a pressure tapping duct is created between said inlet slot 113 and the first edge 101 if the sensor adaptor element 1 is arranged on the top wall 61.

Between the bottom edge regions 112 of the slots 106 are arranged a plurality of webs 114, 115, 116. Said webs 114 to 116, being provided on the bottom surface 108, protrude over the bottom surface 108 between the webs 114, 115 by about half a height of the inlet slot 113, *i.e.* by about 1.5 millimeters. Upon arrangement on the top wall 61, a further plate-like element may be arranged on the top wall 61 such that the webs 114 to 116 and the restriction element 117 extend over the entire height of the pressure tapping duct.

In other embodiments, the webs 114 to 116 may extend over the entire pressure tapping duct, *i.e.* all the fluid flowing in the duct is forced through the meander structure 114 to 116.

The webs 114 to 116 may have a width of about 3 millimeters, and extend substantially in circumferential direction, *i*.*e*. substantially parallel to the first and second edges 101, 102, such as to create a meander pattern 114-116 having a path from the inlet slot 113 to the second tapping port 109. The meander pattern 114-116 is arranged upstream of the second tapping port 110 and designed such that one upstream web 114, 115 extend from each duct-facing edge of the bottom edge regions 112 of the slots 106 leaving a gap between them. Additionally, one middle web 116 is disposed downstream of the gap. The middle web 116 is spaced to the edge regions 112 of the slots 106, *i.e.* it is designed to create gaps to the edge regions 112.

Accordingly, the meander pattern 114-116 connects the inlet slot 113 and the second tapping port 109 such that the fluid flowing through the meander structure 114-116 has to pass through the gaps between or, in some embodiments, over the two upstream webs 114, 115 and around or over said middle web 116 in order to arrive at the tapping port 109. This meandering path of the fluid minimizes the risk of contaminants conveyed in the fluid to flow directly to the tapping port 109; moreover it acts as a general flow resistance. The meander structure 114 to 116 has further a damping effect on the fluid flow in the pressure tapping duct, which further minimizes noise on the measured pressure difference.

Moreover, between the second tapping port 109 and the first tapping port 110 is disposed a further web, the restriction element 117, having the same height as the webs 114 to 116, *i*.*e*. 1.5 millimeters as measured from the bottom surface 108 between the webs 114 to 116 or extending over the entire pressure tapping duct. In downstream direction, the restriction element 117 may have a width of about 10 millimeters and a length between the edge regions of about 40 millimeters. Unlike the webs 114 to 116, the restriction element 117 connects the duct-facing edges of the bottom edge regions 112 of the two slots 106 to one another and creates an appropriate flow resistance for a probing flow being sucked through the inlet slot 113. As can be seen from Fig. 6, the second tapping port 109 is disposed partly in a part cylindrical recess 122 in the middle region of the restriction element.

In a preferred embodiment, the further plate-like adaptor element (not shown) is arranged or integrated into the casing 50 of the ventilation installation. This further plate-like element may have the corresponding shape of the recess on the bottom side 108 of the base element 10. Accordingly, the further plate-like element may be shaped such that the fluid flow through the pressure tapping duct is forced to meander between the webs 114 to 116 and to substantially entirely pass through the differential pressure sensor, the sensor being a dynamic differential pressure sensor that lets pass all of the fluid. In the case of a static differential pressure sensor, the two pressure tapping ports 109, 110, and consequently the fluid inlet 113 and the fluid outlet 121 should not be in fluidic communication. In that instance, the restriction element 117 separates the two volumes from one another. This is particularly advantageous when using a static differential pressure sensor 2 *(i.e.* not fluid flow through the sensor 2).

Downstream of the restriction element 117, the pressure tapping duct is widening as the bottom surface 108 moves up toward the top surface 107 and creates a chamber 118 into which the first tapping port 110 extends into. The chamber 118 also widens in circumferential direction *(cf* Fig. 6). The chamber 118 is part of the pressure tapping duct and is fluidly connected through an outlet opening 121 to the suction orifice 53, *i.e.* to the main fluid flow sucked by the impeller 56 through the suction orifice 53. In radial direction toward the first edge 101 and radially downstream of the tapping port 110, the chamber 118 tapers smoothly with the downward curving base element 10 to the first edge 101 such as to form the outlet opening 121, wherein the first edge 101 lies in a plane through the bottom edge regions 112 of the slots 106.

An upstream side wall element 119 and a downstream side wall element 120 delimit the chamber 118 in circumferential direction.

The sensor adaptor element 1 may be arranged on the top wall 61 of the casing 50 such that the chamber 118 is fluidly connected to the suction orifice 53, *i.e.* such that the first edge 101 of the adaptor element 1 is disposed close to the periphery edge 55 or to the suction port wall 52, creating a slot-slit outlet opening 121. Accordingly, the pressure tapping duct extends from the inlet slot 113 to the chamber 118 and through the outlet opening 121 into the suction orifice 53, while passing the two tapping ports 109, 110.

In use, the fan 5 sucks a fluid, e.g. ambient air, into the suction orifice 53. Fluid flow is thereby conveyed over the top surface 107 of the sensor adaptor element 1 and guided from the planar region of the top surface 107 over the smoothly tapering edge region 1010 down to the first edge 101. Below the first edge 101 opens the chamber 118 through the part annular outlet opening 121 to the main fluid flow. Fluid flow over the first edge 101 induces a Venturi effect at the outlet opening 121 sucking fluid out of the pressure tapping duct into the suction orifice 53. The outlet opening 121 is therefore the measurement port provided by the sensor adaptor element 1. Accordingly, ambient fluid is sucked into the inlet slot 113 and a fluid flow establishes in the pressure tapping duct between the bottom surface 108 and the outer surface 51 of the top wall 61 or the further plate-like element, while a pressure drop establishes between the tapping ports 109, 110. This pressure difference between the two tapping ports 109, 110 is a measureable parameter for the differential pressure sensor 2 and is a measure for the flow passing the first edge 101. Consequently, the output of the sensor 2 allows determining the main fluid flow through the suction orifice 53.

As the inlet slot 113 is disposed at the far end of the base element 10 with respect to the first edge 101, the latter being close or in the main fluid flow, and as the base element 10 is oriented substantially perpendicularly to the L-axis, any ambient fluid sucked into the inlet slot 113 originates from a location at considerable distance to the aspiration area of the suction orifice 53. Accordingly, the risk of sucking contaminants into the pressure tapping duct is minimized, as any particle or contaminant concentration is highest close to the suction orifice 53 or in the main fluid flow.

Moreover, the inlet slot 113 is rather long, *i.e.* it has about the same length as the first edge 101, which keeps the flow speed of any fluid entering in the pressure tapping duct comparatively low and therefore further minimized the risk of damage due to contaminates in the fluid.

The sensor adaptor element 1 has arranged at its first edge 101 of the base element 10 a deflecting element 150. The deflecting element 150 is designed as a plate element that is arranged substantially perpendicularly to the base element 10. The deflection element 150 covers the slot-like outlet opening 121, *i.e.* its upstream edge 157 is arranged upstream of the outlet opening 121, its downstream edge downstream of the outlet opening 121 (*cf.* Fig. 4). The deflection element 150 curves in the L-direction and in the circumferential direction along the periphery edge 55. The curving in L-direction (*cf.* Fig. 4) ensures that the fluid deflection element 150 follows the top surface 107 in the tapering region 1010. The curving in the circumferential direction along the periphery edge 55 ensures that a Venturi channel created between the deflection element 150 and the base element 10 has a constant cross section. The deflection element 150 covers the downward bending part 1010 of the base element 10 and the first edge 101. The deflecting element 150 extends in circumferential direction along the first edge 101 of the base element 10. It is shaped as hood-like bent plate element that substantially follows the curvature of the tapering part 1010 of the base element 10. At the same time, the hood-like deflecting element 150 is spaced from the top surface 107 in that region such as to create the Venturi channel 154 between the curving top surface 107 of the base element 10 and the radially outward facing surface of the deflection element 150.

The Venturi channel 154 collects fluid from the main fluid flow, guides the branched-off fluid to flow over the outlet opening 121 and releases said fluid back to the main flow through an annular section orifice back at the Venturi channel's end.

The deflecting element 150 extends in L-direction past the planar section the top surface 107 and past the first edge 101 of the base element (*cf.* Fig. 4).

In order to minimize a circumferential flow component of the aspired or branched-off fluid in the Venturi channel 154, the Venturi channel 154 is dived into circumferential subsections by means of planer partition wall elements 152 extending in radial direction and parallel to the L-axis (*cf.* Fig. 6). In the illustrated embodiment, three partition wall elements 152 are disposed between upstream and downstream end wall elements 153 (*cf.* Fig. 6). Thereby, the Venturi channel 154 is divided into four parallel extending Venturi sub channels 155, each of which guides fluid in a stabilized flow to a part of the first edge 101 of the base element 10, *i*.*e*. to overflow the outlet opening 121 of the pressure tapping duct, which, in effect, enhances the measurement conditions for the differential pressure sensor 2 probing the probing pressure difference between tapping ports 109, 110.

The fluid deflection element 150 stabilizes the flow over the outlet opening 121 and therefore reduces measurement noise.

**LIST OF REFERENCE SIGNS**

| | | | |
|---|---|---|---|
| 1 | sensor adaptor element | 150 | fluid deflecting element |
| 10 | base plate | 152 | partition wall element |
| 101 | first edge of 10 | 153 | end wall element |
| 1010 | edge region of 101 | 154 | Venturi channel |
| 102 | second edge of 10 | 155 | Venturi sub channel |
| 103 | upstream side edge of 10 | 156 | downstream edge of 150 |
| 104 | downstream side edge of 10 | 157 | upstream edge of 150 |
| 105 | kink | | |
| 106 | mounting slot | 2 | differential pressure sensor |
| 107 | top surface | | |
| 108 | bottom surface | 3 | mass flow sensor device |
| 109, 110 | pressure tapping port | | |
| 111 | top edge region of 106 | 5 | centrifugal fan |
| 112 | bottom edge region of 106 | 50 | casing of 5 |
| 113 | fluid inlet slot | 51 | outer surface |
| 114 | web | 52 | suction port wall |
| 115 | web | 53 | suction orifice |
| 116 | web | 54 | side wall |
| 117 | restriction element | 55 | periphery edge of 52 |
| 118 | chamber | 56 | discharge port |
| 119 | upstream side wall element | 57 | impeller |
| 120 | downstream side wall element | 58 | blade of 57 |
| | | 59 | flange |
| 121 | fluid outlet opening | 60 | through-holes in 59 |
| 122 | part cylindrical recess in 117 | 61 | top wall of 50 |

## Claims

1. Sensor adaptor element (1) for a differential pressure sensor (2), the sensor adaptor element (1) being configured to be attached to or integrated in a ventilation installation (5), in particular a centrifugal fan; and having a base element (10); the base element (10) comprising or being adapted to create with a casing (50) of the ventilation installation (5) a pressure tapping duct, said pressure tapping duct comprising an inlet opening (113) and first and second pressure tapping ports (109, 110) for probing with the differential pressure sensor (2) local pressures in said pressure tapping duct, wherein the pressure tapping duct comprises an outlet opening (121) configured to be placed in a main fluid flow being sucked into the ventilation installation (5) such that a Venturi effect occurs at the outlet opening (121) causing an under pressure in at least part of said pressure tapping duct, **characterized in that** the base element (10) is a plate-like element and **in that** the outlet opening (121) is a slot-like opening.

2. Sensor adaptor element (1) according to claim 1, wherein the sensor adaptor element (1) further comprises at least one fluid deflection element (150) that comprises or that is adapted to create with the base element (10) a Venturi channel (154) such that part of the main fluid flow sucked into said ventilation installation (5) is deflected into the Venturi channel (154) and guided to overflow said outlet opening (121).

3. Sensor adaptor element (1) according to claim 2, wherein the fluid deflection element (150) covers the outlet opening (121), wherein, preferably, the Venturi channel (154) tapers in flow direction.

4. Sensor adaptor element (1) according to any one of the preceding claims, wherein the outlet opening (121) is disposed at a first edge (101) of the base element (10) and the inlet opening (113) is preferably disposed at a second edge (102) of the base element (10), the second edge (102) being arranged opposite the first edge (101).

5. Sensor adaptor element (1) according to the preceding claim, wherein an edge region (1010) of the base element (10) at the first edge (101) is a full annulus or an annular section tapering toward the first edge (101), wherein, preferably, the annular section having a central angle is smaller than or equal to 180°, preferably ranging between 20° to 120°, more preferably between 30° to 60°, or being 45°.

6. Sensor adaptor element (1) according to any one of the preceding claims 2 to 5, wherein the fluid deflection element (150) is arranged along the first edge (101), wherein the first edge (101) and the fluid deflection element (150) are both curved to extend parallel to one another along their lengthwise direction, wherein, preferably, the deflection element (150) is curved in flow direction.

7. Sensor adaptor element (1) according to any one of the preceding claims 2 to 6, wherein the pressure tapping duct extends, at least in sections, substantially angularly or perpendicularly to a direction of the Venturi channel (154), wherein, preferably, the pressure tapping duct is curved or tapers in the region of the outlet opening (121) such that an outlet direction of the outlet opening (121) and the direction of the Venturi channel (154) extend along the same direction.

8. Sensor adaptor element (1) according to any one of the preceding claims, wherein the base element (10) is designed such that the inlet opening (113) is an inlet slot that is created between a bottom surface (108) of the base element (10) and an outer surface (51) of a casing (50) of the ventilation installation (5) when the sensor adaptor element (1) is arranged on the outer surface (51).

9. Sensor adaptor element (1) according to any one of the preceding claims, wherein a flow restriction element (117) is arranged in the pressure tapping duct, wherein the flow restriction element (117) is disposed between the first and second pressure tapping ports (109,110) and restricts a cross section of the pressure tapping duct by least 30% to 100% of its cross section at the inlet opening (113), and, preferably, wherein downstream of the flow restriction element (117) the pressure tapping duct is widening into a chamber (118), which chamber (118) tapers in downstream direction of the pressure tapping duct to the outlet opening (121).

10. Sensor adaptor element (1) according to any one of the preceding claims, wherein a bottom surface (108) of the base element (10) is equipped with a meander structure (114 to 116), wherein the meander structure (114 to 116) is preferably arranged in the pressure tapping duct, most preferably upstream of the pressure tapping ports (109,110).

11. Sensor adaptor element (1) according to any one of the preceding claims 2 to 10, wherein the deflection element (150) is a curved plate with end wall elements (153) delimiting the Venturi channel (154) in the direction along the first edge (101).

12. Sensor adaptor element (1) according to any one of the preceding claims, 2 to 11 wherein the deflection element (150) has at least one, preferably two, three, four, or more partition wall elements (152) dividing the Venturi channel (154) into Venturi sub channels (155).

13. Mass flow sensor device (3) comprising a sensor adaptor element (1) according to any one of the preceding claims and a differential pressure sensor (2), wherein the differential pressure sensor (2) is connected to the pressure tapping ports (109, 110).

14. Ventilation installation (5), in particular a centrifugal fan, with a sensor adaptor element (1) according to any one of the preceding claims or with a mass flow sensor device (3) according to claim 13.

15. Ventilation installation (5) according to the preceding claim, wherein the ventilation installation (5) is a centrifugal fan with a suction port wall (52) defining a suction orifice (53), wherein the suction port wall (52) preferably has an annular and the suction orifice (53) a circular shape, wherein the adaptor element (1) is disposed on or directly integrated to a casing (50) of the ventilation installation (5), preferably close to the discharge opening (56) of the casing (50) and/or wherein the adaptor element (1) is sized such that the base element (10) covers a sector with a central angle smaller than or equal to 180°, preferably ranging between 20° to 120° of the circumference of the suction port wall (52).

16. Use of a ventilation installation (5) with a mass flow sensor device (3) according to claim 13 for measuring a fluid flow.

## Patentansprüche

1. Sensoradapterelement (1) für einen Differentialdrucksensor (2), wobei das Sensoradapterelement (1) ausgebildet ist, an einer Ventilationsanlage (5), insbesondere an einem Zentrifugalventilator befestigt oder darin integriert zu werden; und aufweisend ein Basiselement (10), wobei das Basiselement (10) einen Druckmesskanal aufweist oder eingerichtet ist, mit einem Gehäuse (50) der Ventilationsanlage (5) einen Druckmesskanal zu bilden, wobei der besagte Druckmesskanal eine Einlassöffnung (113) aufweist, sowie einen ersten und einen zweiten Druckmessanschluss (109, 110) zur Untersuchung von Ortsdrücken in dem besagten Druckmesskanal mittels des Differentialdrucksensors (2), wobei der Druckmesskanal eine Auslassöffnung (121) aufweist, welche ausgebildet ist, in einem Hauptfluidstrom, welcher in die Ventilationsanlage (5) eingesaugt wird, platziert zu werden, sodass ein Venturi-Effekt an der Auslassöffnung (121) auftritt, was in einem Unterdruck in mindestens einem Teil des besagten Druckmesskanals resultiert, **dadurch gekennzeichnet, dass** das Basiselement (10) ein plattenähnliches Element ist und dass die Auslassöffnung (121) eine schlitzähnliche Öffnung ist.

2. Sensoradapterelement (1) gemäss Anspruch 1, wobei das Sensoradapterelement (1) des Weiteren mindestens ein Fluidumlenkungselement (150) aufweist, welches einen Venturikanal aufweist oder eingerichtet ist, mit dem Basiselement (10) einen Venturikanal (154) zu bilden, sodass ein Teil des in die besagte Ventilationsanlage (5) eingesaugten Hauptfluidstroms in den Venturikanal (154) hinein umgelenkt wird und derart geleitet wird, dass er die besagte Auslassöffnung (121) überströmt.

3. Sensoradapterelement (1) gemäss Anspruch 2, wobei das Fluidumlenkungselement (150) die Auslassöffnung (121) bedeckt, wobei vorzugsweise der Venturikanal (154) sich in Fliessrichtung verjüngt.

4. Sensoradapterelement (1) gemäss einem der vorhergehenden Ansprüche, wobei die Auslassöffnung (121) an einer ersten Kante (101) des Basiselements (10) angeordnet ist, und wobei die Einlassöffnung (113) vorzugsweise an einer zweiten Kante (102) des Basiselements (10) angeordnet ist, wobei die zweite Kante (102) gegenüber von der ersten Kante (101) angeordnet ist.

5. Sensoradapterelement (1) gemäss dem vorhergehenden Anspruch, wobei ein Kantenbereich (1010) des Basiselements (10) an der ersten Kante (101) ein vollständiger Ring oder ein Ringabschnitt ist, welcher sich zur ersten Kante (101) hin verjüngt, wobei vorzugsweise der Ringabschnitt einen Zentriwinkel aufweist, welcher kleiner oder gleich 180° ist, vorzugsweise im Bereich zwischen 20° und 120°, insbesondere bevorzugt zwischen 30° und 60° liegt, oder 45° ist.

6. Sensoradapterelement (1) gemäss einem der vorhergehenden Ansprüche 2 bis 5, wobei das Fluidumlenkungselement (150) entlang der ersten Kante (101) angeordnet ist, wobei die erste Kante (101) und das Fluidumlenkungselement (150) beide gekrümmt sind, sodass sie sich parallel zueinander entlang ihrer Längsrichtung erstrecken, wobei vorzugsweise das Umlenkungselement (150) in Fliessrichtung gekrümmt ist.

7. Sensoradapterelement (1) gemäss einem der vorhergehenden Ansprüche 2 bis 6, wobei der Druckmesskanal sich mindestens abschnittsweise im Wesentlichen abgewinkelt zu oder rechtwinklig zu einer Richtung des Venturikanals (154) erstreckt, wobei vorzugsweise der Druckmesskanal gekrümmt ist oder sich im Bereich der Auslassöffnung (121) verjüngt, sodass eine Auslassrichtung der Auslassöffnung (121) und die Richtung des Venturikanals (154) sich entlang der gleichen Richtung erstrecken.

8. Sensoradapterelement (1) gemäss einem der vorhergehenden Ansprüche, wobei das Basiselement (10) derart gestaltet ist, dass die Einlassöffnung (113) ein Einlassschlitz ist, welcher zwischen einer Bodenfläche (108) des Basiselements (10) und einer Aussenfläche (51) eines Gehäuses (50) der Ventilationsanlage (5) gebildet wird, wenn das Sensoradapterelement (1) an der Aussenfläche (51) angeordnet ist.

9. Sensoradapterelement (1) gemäss einem der vorhergehenden Ansprüche, wobei ein Fliessbehinderungselement (117) im Druckmesskanal angeordnet ist, wobei das Fliessbehinderungselement (117) zwischen dem ersten und zweiten Druckmessanschluss (109, 110) angeordnet ist und einen Querschnitt des Druckmesskanals um mindestens 30% bis 100% seines Querschnittes an der Einlassöffnung (113) verengt, und, vorzugsweise, wobei stromabwärts des Fliessbehinderungselements (117) der Druckmesskanal sich in eine Kammer (118) hinein erweitert, wobei diese Kammer (118) sich in einer Richtung stromabwärts des Druckmesskanals zur Auslassöffnung (121) hin verjüngt.

10. Sensoradapterelement (1) gemäss einem der vorhergehenden Ansprüche, wobei eine Bodenfläche (108) des Basiselements (10) mit einer Mäanderstruktur (114 bis 116) ausgestattet ist, wobei die Mäanderstruktur (114 bis 116) vorzugsweise im Druckmesskanal angeordnet ist, insbesondere bevorzugt stromaufwärts von den Druckmessanschlüssen (109, 110).

11. Sensoradapterelement (1) gemäss einem der vorhergehenden Ansprüche 2 bis 10, wobei das Umlenkelement (150) eine gekrümmte Platte mit Endwandelementen (153) ist, welche den Venturikanal (154) in der Richtung entlang der ersten Kante (101) begrenzen.

12. Sensoradapterelement (1) gemäss einem der vorhergehenden Ansprüche 2 bis 11, wobei das Umlenkelement (150) mindestens ein, vorzugsweise zwei, drei, vier oder mehr Trennwandelemente (152) aufweist, welche den Venturikanal (154) in Venturiunterkanäle (155) unterteilen.

13. Massenflusssensorvorrichtung (3), aufweisend ein Sensoradapterelement (1) gemäss einem der vorhergehenden Ansprüche und einen Differentialdrucksensor (2), wobei der Differentialdrucksensor (2) mit den Druckmessanschlüssen (109, 110) verbunden ist.

14. Ventilationsanlage (5), insbesondere ein Zentrifugalventilator, mit einem Sensoradapterelement (1) gemäss einem der vorhergehenden Ansprüche oder mit einer Massenflusssensorvorrichtung (3) gemäss Anspruch 13.

15. Ventilationsanlage (5) gemäss dem vorhergehenden Anspruch, wobei die Ventilationsanlage (5) ein Zentrifugalventilator mit einer eine Absaugöffnung (53) definierenden Saugmundwand (52) ist, wobei die Saugmundwand (52) vorzugsweise ringförmig und die Absaugöffnung (53) kreisförmig ausgebildet ist, wobei das Adapterelement (1) auf oder direkt integriert an einem Gehäuse (50) der Ventilationsanlage (5) angeordnet ist, vorzugsweise in der Nähe der Austrittsöffnung (56) des Gehäuses (50) und/oder wobei das Adapterelement (1) derart dimensioniert ist, sodass das Basiselement (10) einen Abschnitt mit einem Zentriwinkel abdeckt, welcher kleiner oder gleich 180° ist, vorzugsweise im Bereich von 20° bis 120° des Umfangs der Saugmundwand (52).

16. Verwendung einer Ventilationsanlage (5) mit einer Massenflussvorrichtung (3) gemäss Anspruch 13 zur Messung eines Fluidstroms.

## Revendications

1. Élément adaptateur de capteur (1) pour un capteur de pression différentielle (2), l'élément adaptateur de capteur (1) étant configuré pour être fixé à ou intégré dans une installation de ventilation (5), en particulier un ventilateur centrifuge; et ayant un élément de base (10); l'élément de base (10) comprenant ou étant adapté pour créer, avec un boîtier (50) de l'installation de ventilation (5), un conduit de prise de pression, ledit conduit de prise de pression comprenant une ouverture d'entrée (113) et des premier et deuxième orifices de prise de pression (109 , 110) pour sonder avec le capteur de pression différentielle (2) des pressions locales dans ledit conduit de prise de pression, dans lequel le conduit de prise de pression comprend une ouverture de sortie (121) étant configurée peut être placée dans un flux de fluide principal étant aspiré dans l'installation de ventilation (5) de sorte qu'un effet Venturi se produit au niveau de l'ouverture de sortie (121) provoquant une sous-pression dans au moins une partie dudit conduit de prise de pression, **caractérisé en ce que** l'élément de base (10) est un élément de type plaque et **en ce que** l'ouverture d'entrée (113) est une ouverture de type fente.

2. Élément adaptateur de capteur (1) selon la revendication 1, dans lequel l'élément adaptateur de capteur (1) comprend en outre au moins un élément de déviation de fluide (150) qui comprend ou qui est adapté pour créer avec l'élément de base (10) un canal Venturi (154) de telle sorte qu'une partie du flux de fluide principal aspiré dans ladite installation de ventilation (5) est déviée dans le canal Venturi (154) et guidée pour déborder ladite ouverture de sortie (121).

3. Élément adaptateur de capteur (1) selon la revendication 2, dans lequel l'élément de déviation de fluide (150) recouvre l'ouverture de sortie (121), dans lequel, de préférence, le canal Venturi (154) se rétrécit dans la direction du flux.

4. Elément adaptateur de capteur (1) selon l'une quelconque des revendications précédentes, dans lequel l'ouverture de sortie (121) est disposée sur un premier bord (101) de l'élément de base (10) et l'ouverture d'entrée (113) est de préférence disposée sur un deuxième bord (102) de l'élément de base (10), le deuxième bord (102) étant disposé en face du premier bord (101).

5. Elément adaptateur de capteur (1) selon la revendication précédente, dans lequel une région de bord (1010) de l'élément de base (10) sur le premier bord (101) est un anneau plein ou une section annulaire se rétrécissant vers le premier bord (101), dans lequel, de préférence, la section annulaire ayant un angle central est inférieure ou égale à 180 °, de préférence comprise entre 20 ° et 120 °, plus préférablement entre 30 ° et 60 °, ou étant de 45 °.

6. Élément adaptateur de capteur (1) selon l'une quelconque des revendications précédentes 2 à 5, dans lequel l'élément de déviation de fluide (150) est disposé le long du premier bord (101), dans lequel le premier bord (101) et l'élément de déviation de fluide (150) sont tous deux incurvés pour s'étendre parallèlement les uns aux autres le long de leur direction longitudinale, dans lequel, de préférence, l'élément de déviation (150) est incurvé dans la direction du flux.

7. Elément adaptateur de capteur (1) selon l'une quelconque des revendications précédentes 2 à 6, dans lequel le conduit de prise de pression s'étend, au moins en sections, sensiblement angulairement ou perpendiculairement à une direction du canal Venturi (154), dans lequel, de préférence, le conduit de prise de pression est incurvé ou se rétrécit dans la région de l'ouverture de sortie (121) de telle sorte qu'une direction de sortie de l'ouverture de sortie (121) et la direction du canal Venturi (154) s'étendent le long de la même direction.

8. Elément adaptateur de capteur (1) selon l'une quelconque des revendications précédentes, dans lequel l'élément de base (10) est conçu de telle sorte que l'ouverture d'entrée (113) est une fente d'entrée qui est créée entre une surface inférieure (108) de l'élément de base (10) et une surface extérieure (51) d'un boîtier (50) de l'installation de ventilation (5) lorsque l'élément adaptateur de capteur (1) est disposé sur la surface extérieure (51).

9. Élément adaptateur de capteur (1) selon l'une quelconque des revendications précédentes, dans lequel un élément de restriction de flux (117) est disposé dans le conduit de prise de pression, dans lequel l'élément de restriction de flux (117) est disposé entre les premier et deuxième orifices de prise de pression (109, 110) et restreint une section transversale du conduit de prise de pression d'au moins 30% à 100% de sa section transversale au niveau de l'ouverture d'entrée (113), et, de préférence, dans lequel en aval de l'élément de restriction de flux (117), le conduit de prise de pression s'élargit en une chambre (118), laquelle chambre (118) se rétrécit en aval du conduit de prise de pression jusqu'à l'ouverture de sortie (121).

10. Elément adaptateur de capteur (1) selon l'une quelconque des revendications précédentes, dans lequel une surface inférieure (108) de l'élément de base (10) est équipée d'une structure en méandre (114 à 116), dans laquelle la structure en méandre (114 à 116) est de préférence disposé dans le conduit de prise de pression, le plus préférablement en amont des orifices de prise de pression (109, 110).

11. Elément adaptateur de capteur (1) selon l'une quelconque des revendications précédentes 2 à 10, dans lequel l'élément de déviation (150) est une plaque incurvée avec des éléments de paroi d'extrémité (153) délimitant le canal Venturi (154) dans la direction le long du premier bord (101).

12. Élément adaptateur de capteur (1) selon l'une quelconque des revendications précédentes, 2 à 11, dans lequel l'élément de déviation (150) a au moins un, de préférence deux, trois, quatre ou plus éléments de paroi de séparation (152) divisant le canal Venturi (154) en sous-canaux Venturi (155).

13. Dispositif de capteur de flux massique (3) comprenant un élément adaptateur de capteur (1) selon l'une quelconque des revendications précédentes et un capteur de pression différentielle (2), dans lequel le capteur de pression différentielle (2) est connecté aux orifices de prise de pression (109, 110).

14. Installation de ventilation (5), en particulier un ventilateur centrifuge, avec un élément adaptateur de capteur (1) selon l'une quelconque des revendications précédentes ou avec un dispositif capteur de flux massique (3) selon la revendication 13.

15. Installation de ventilation (5) selon la revendication précédente, dans laquelle l'installation de ventilation (5) est un ventilateur centrifuge avec une paroi d'orifice d'aspiration (52) définissant un orifice d'aspiration (53), dans laquelle la paroi d'orifice d'aspiration (52) a de préférence une forme annulaire et l'orifice d'aspiration (53) a une forme circulaire, dans lequel l'élément adaptateur (1) est disposé sur ou directement intégré à un boîtier (50) de l'installation de ventilation (5), de préférence à proximité de l'ouverture d'évacuation (56) du boîtier (50) et / ou dans lequel l'élément adaptateur (1) est dimensionné de sorte que l'élément de base (10) couvre un secteur avec un angle central inférieur ou égal à 180 °, de préférence compris entre 20 ° et 120 ° de la circonférence de la paroi de l'orifice d'aspiration (52).

16. Utilisation d'une installation de ventilation (5) avec un dispositif capteur de flux massique (3) selon la revendication 13 pour mesurer un flux de fluide.
